# EUROPEAN PATENT APPLICATION

(11) **EP 3 067 853 A1**
(43) Date of publication of application: **14.09.2016**
(21) Application number: 13897161.9
(22) Date of filing: 10.12.2013
(51) Int. Cl.: G06Q 50/20

(54) **TALENT AND CAREER-BASED ACADEMIC MANAGEMENT SYSTEM AND METHOD**

(30) Priority: 08.11.2013 KR 20130135138
(71) Applicant: Ham, Ki Chul, Yesan-gun, Chungcheongnam-do 340-804 (KR)
(72) Inventor: Ham, Ki Chul, Yesan-gun, Chungcheongnam-do 340-804 (KR)
(74) Representative: Rüger, Barthelt & Abel
(86) International application number: PCT/KR2013/011423
(87) International publication number: WO 2015/068894

(57) **Abstract**

Provided are an education management system and an education management method which allow the recognition of talent-centered credits or career-centered credits, the education management system linked with a user terminal and an internet server through a network, including: a receiving unit configured to receive a student's career data from the user terminal; a career assessment unit configured to perform career assessment based on predetermined standards with regard to career matters included in the career data; and a credit-awarding unit configured to give credits corresponding to grades resulting from the career assessment with regard to the student's major for the career matters.

## Description

### CROSS-REFERENCE TO RELATED APPLICATION

This application claims priority to Korean Patent Application No. 10-2013-0135138, filed on November 8, 2013, in the Korean Intellectual Property Office, the entire contents of which are hereby incorporated by reference.

### BACKGROUND OF THE INVENTION

### Field of the Invention

The present invention relates to an education management system and method based on talents and carriers.

### Description of the Related Arts

Knowledge possessed by the people becomes a source of competitiveness in knowledge-based society. Accordingly, the development and effective utilization of human resources are very important in terms of the competitiveness of countries or companies.

Recently, large numbers of companies are converting their organization systems into the strategy of growth on the basis of human resources in which knowledge and technologies are accumulated instead of the strategy of growth on the basis of the input of capital or a labor force which is faced with a limit.

However, an education management system which has been currently used at a university or a graduate school does not support the development or effective utilization of human resources for affiliated students.

Although some universities have promoted to develop human resources using an education management method on the basis of field-centered education, since various talents or careers possessed by the students have not been basically considered, it is disadvantageous in that a utilization scope thereof is substantially limited in developing or utilizing human resources.

Meanwhile, various online education systems have been recently suggested due to the generation of a case where it is difficult to take an offline course due to geographical and time factors, and the like. This online education system has been specialized based on communication or connection-related technologies accompanied with online education, and in this regard, in order to ensure the internal stability of attendance and absence evaluation or educational courses, methods for surveillance or assessment have been additionally suggested so that attendees can take a substantive course.

However, the conventional online education system is intended to obtain only similar effects to those of an offline education system by improving learning efficiency and enabling substantive classes to be performed, and fails to reflect a student's talents or careers in educational administration. Also, the conventional system and method for online educational management are focused on only the aspects of grade evaluation and education management, and still fail to reflect a student's talents or careers.

As described above, in the conventional education management-related system, since students' talents or careers are not reflected or considered, the system has a limit that it cannot be substantially utilized for the development or efficient utilization of human resources.

### SUMMARY OF THE INVENTION

An aspect of the present invention provides an education management system and method which are effective in developing and utilizing human resources by enabling a student's talents or careers to be admitted as credits through a predetermined rule or a fixed authentication procedure, and which enable graduation credits to be obtained based on only credits obtained by talents and/or careers.

Another aspect of the present invention provides an education management system and method which enable talents and knowledge to be admitted as a degree so that a student who has the talents and knowledge can take the degree, the talents being demonstrated in areas in which the talents is needed and the knowledge being obtained in areas (an industrial site, an authorized education institution, an international contest and the like) which can gain the careers.

Also, a further aspect of the present invention provides an education management system and method that enable careers except for school classes to be incorporated into a system for the completion of online education and to be linked with credits required for the obtaining of a degree by evaluating the careers pursuant to predetermined rules and authenticating the careers, which was not attempted in a conventional online or offline education system and method.

Also, a yet aspect of the present invention provides an education management system and an education management method that can be easily and variously approached by people who do not enter university, need a degree, or would like to acquire a lot of knowledge, can be utilized as a space capable of satisfying people's various cultural desires, can be a reference library where university or graduate school students can faithfully study, and can perform a role as a platform for initiating others into a person's talents and sharing knowledge.

Also, yet another aspect of the present invention provides an education management system and an education management method based on talents and careers that enable various functional groups, such as associations existing in the society except for career assessment to participate in a teaching area, and enable the organizations of company units to participate in the teaching area and in courses as themselves, thereby allowing to take courses based on links between schools and industry.

Also, still another aspect of the present invention provides an education management system and an education management method based on talents and careers in an alternative university form on the basis of learner-centered autonomous education rather than public education or educator-centered education.

According to an aspect of the present invention, there is provided an education management system based on talents and careers including: a receiving unit configured to receive a request signal for credit recognition to a student's talent matters or career matters relating to major subjects of a major department; an assessment processing unit configured to perform assessment of talent matters or career matters; a credit recording unit configured to record completed credits for a major department or major subjects according to the results of assessment processing; a credit judgment unit configured to judge whether or not the total number of credits completed by the student including credits satisfied by the talent and career matters is more than the number of credits required to graduate; and a degree recording unit configured to record a degree of the major department for the student when a total number of completed credits is more than the number of credits required to graduate.

In one embodiment, the assessment processing unit may include: an item judgment unit for judging whether or not the talent matters or the career matters are included in predetermined credit recognition items; an evidentiary material checking unit for confirming legality of the talent matters or the career matters based on an evidentiary material basic material when there is the evidentiary material, wherein the confirming of the legality includes comparing the digital sign of a higher authority included in the evidentiary material with standard information; a legality authentication unit linked with the higher authority related to the talent matters or career matters when there is no evidentiary material for the talent matters or career matters, thereby confirming legality of the talent matters or career matters; and an assessment result outputting unit for outputting an assessment completion signal regarding the passing or rejecting of assessment for the talent matter or career matters based on a confirmation result of the legality.

In one embodiment, the assessment unit may transmit relevant information (information and the like relating to the talent matters or career maters) to terminals of a predetermined assessment committee's members when the talent matters or career matters are not included in the credit recognition items as a result of judgment of the item judgment unit, and receive reply signals for the permission or rejection of assessment so as to perform assessment of the talent matters or career matters according to various opinions for the permission of the assessment.

In one embodiment, the credit judgment unit may judge whether the total number of completed credits resulting from the assessment is more than 60% of the number of credits required to graduate or less than 100% thereof, or may be implemented to judge whether the number of first completed credits resulting from the assessment is 60 to 100% of the number of credits required to graduate, the number of second completed credits for liberal arts is 10 to 30% of the number of credits required to graduate, the number of third completed credits for attendance classes is more than 5% of the number of credits required to graduate, and the number of fourth completed credits for an internet lecture is more than 5% of the number of credits required to graduate.

In one embodiment, the education management system based on talents and careers may further include a liberal arts credit recording unit which allows recognition of the second completed credits according to a result of the student's participation in a debate class or a topic presentation class. Here, the result of participation may be obtained through a participation or completion recognition signal received from the terminal of a professor in charge of the student who participates in the debate class by topic or the topic presentation class having different credits.

According to another aspect of the present invention, there is provided an education management method based on talents and careers including: receiving a request signal for credit recognition for a student's talent matters or career matters regarding major subjects of a major department; performing assessment of the talent matters or career matters; allowing (recording) the recognition of completed credits regarding the major department or the major subjects according to a result of performing the assessment; judging whether the total number of completed credits of the student including the number of credits satisfied by the talent matters and career matters is more than the number of credits required to graduate; and recording a degree of the major department for the student when the total number of completed credits is more than the number of credits required to graduate.

In one embodiment, the performing of the assessment may include: judging whether or not the talent matters or the career matters are included in predetermined credit recognition items; confirming legality of the talent matters or the career matters based on an evidentiary material basic material when there is the evidentiary material, wherein the confirming of the legality includes comparing the digital sign of a higher authority included in the evidentiary material with standard information; confirming legality of the talent matters or career matters by being linked with the higher authority related to the talent matters or career matters when there is no evidentiary material for the talent matters or career matters; and outputting an assessment completion signal regarding the passing or rejecting of assessment for the talent matter or career matters based on a confirmation result of the legality.

In one embodiment, in the performing of the assessment, as a result of judging whether or not the talent matters or the career matters are included in predetermined credit recognition items, when the talent matters or career matters are not included in the items, the education management system may transmit relevant information to terminals of the members of a predetermined assessment committee, receives reply signals regarding the permission or rejection of the assessment of the talent matters or career matters from the members' terminals, and perform the assessment of the talent matters or career matters according to various opinions of the permission of the assessment among the received replay signals.

In one embodiment, the judging whether the total number of completed credits is more than the number of credits required to graduate may be implemented to judge whether the total number of completed credits resulting from the assessment performed in the credit judgment unit is more than 60% of the number of credits required to graduate or less than 100% thereof, or may be implemented to judge whether the number of first completed credits resulting from the assessment is 60% to 100% of the number of credits required to graduate, the number of second completed credits for liberal arts is 10% to 30% of the number of credits required to graduate, the number of third completed credits for attendance classes is more than 5% of the number of credits required to graduate, and the number of fourth completed credits for an internet lecture is more than 5% of the number of credits required to graduate.

In one embodiment, the education management method based on talents and careers may further include admitting the second completed credits according to a result of the student's participation in a debate class or a topic presentation class. Here, the result of the participation may be obtained by (or extracted from) a participation or completion recognition signal regarding the student who participated in graded debate classes or topic presentation classes having different credits, received in the education management system from the terminal of the professor in charge.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:
FIG. 1 is a schematically entire block diagram showing an education management system based on talents and careers (hereinafter briefly referred to as the 'education management system') according to the present invention;
FIG. 2 is a block diagram showing one embodiment of the education management system of FIG. 1;
FIG. 3 is a block diagram showing an assessment unit of the education management system of FIG. 2;
FIGS. 4 and 5 are flow charts showing an education management method based on talents and careers (hereinafter briefly referred to as the 'education management method') according to one embodiment of the present invention;
FIG. 6 is a block diagram showing an education management system according to another embodiment of the present invention;
FIG. 7 is a flow chart showing an education management method according to another embodiment of the present invention; and
FIG. 8 is a view showing the constitution of credits required to graduate according to the education management method of FIG. 7.

### DETAILED DESCRIPTION OF THE INVENTION

Hereinafter, embodiments of the present invention will be described in detail with reference to the accompanying drawings. In describing the present invention, the detailed description regarding a publicly known universal function or configuration related to the present invention will be omitted when the detailed description makes the gist of the present invention unclear. Reference should now be made to the drawings, in which the same reference numerals are used throughout the different drawings to designate the same or similar components.

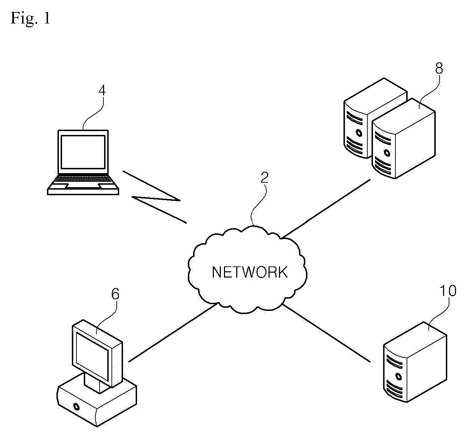

FIG. 1 is a schematically entire block diagram showing an education management system based on talents and careers (hereinafter briefly referred to as the 'education management system') according to the present invention;

Referring to FIG. 1, an education management system 10 according to the present embodiment is connected to user terminals 4, 6 and a higher authority through a network 2.

Here, the education management system 10 may include a communication module or a gateway connected to the network 2. The education management system 10 may be implemented by an education management program mounted in or linked with a school sever or a school computer system or a constitution unit (an education management server) for performing a function corresponding to the education management program. The education management server may be implemented of some constitutions of the school server or the school computer system.

The network may include a link connected for allowing communication among terminal users, a node and a communication network which is the collection of terminals. For example, the communication network may include a wire network and a wireless network, the wire network may include a public switched telephone network, and the wireless network may include a mobile communication network. Also, the communication network may include a local area network, a private network, a satellite network, the Internet and the like.

The user terminals 4, 6 may be implemented of at least one of all computer terminals which can be connected to the education management system through the network. For example, the user terminals may be a desktop computer, a notebook computer, a smart pad (Galaxy tap, galaxy note series, iPad and the like), a smart phone (Galaxy S series, Optimus G series, iPhone), a client terminal and the like.

Also, the user terminals 4, 6 may be a computer terminal used by the student registered in a school or a computer terminal used by an educational personnel of the school for the input of career matters received from the student.

The higher authority 8 includes a server of the higher authority or a computer system of the higher authority connected to the education management system 10 in order to certificate or confirm the student's talent matters or careers. The higher authority 8 may be provided so as to authenticate legality of the details of career matters include in the student's career matters or an identifier (a time stamp and the like) of the higher authority and transmit a result of the authentication to the education management system 10. Also, the higher authority 8 may be a means for matching career data received from the education management system 10 with career record information of a predetermined database to transmit an authentication result of career matters according to the result of comparison to the education management system 10 or may be a constitution unit for performing a function corresponding to the means.

As previously described, the education management system 10 according to the embodiment is connected to the user terminals 4, 6 and the higher authority 8 through the network 2 and receives a request signal for credit authentication for the talent matters or career matters from the user terminals 4, 6, thereby enabling completed credits to be provided with the relevant student's major department or major subjects according to a processing result after treating career assessment for the received career matters.

Explaining the education management system more specifically while giving an example, the education management system 10 may be implemented such that talent matters relating to technologies or qualification designated in the nation are admitted as talent recognition credits. A national technology or national qualification may include qualification, such as a technical expert, a master mechanic, a driver, a licensed technician and the like. Also, the national technology or national qualification may include qualification, such as a fire protection system manager, an e-commerce manager, an aircraft maintenance technician, a licensed real estate agent and the like. In order to obtain a national technology or national qualification, a level of education in which a relevant person graduated a two-year or more college is mainly needed, and thus, the education management system 10 may apply credits in which talents are admitted to completed credits of a specific grade (more than third grade) or a specific major subject or a subject having no level of education with regard to a qualifying examination for a national technology or national qualification.

For example, the education management system 10 enables talent matters relating to qualification pursuant to the Enforcement Decree and Enforcement Rule of the National Technical Qualifications Act to be admitted as credits of a relevant major subject, and one example thereof is shown in the following Table 1.

**[Table 1]**

| Big classification | Middle classification | Name of qualification | Major department | Major subject | Talent based credit |
|---|---|---|---|---|---|
| Material | Optics | Optical instrument industry engineer | Department of Physics | Optical instrument | 20 |
| Material | Metal material | Material structure evaluation industry engineer | Metal Engineering | Material structure | 20 |
| Environment | Atmospheric environment | Meteorological appraisal engineer | Department of Atmosphere | Meteorological appraisal | 20 |

As shown in Table 1, the education management system 10 may enable talent matters regarding the name of qualification or a certificate to be admitted as credits of a specific major department.

In the aforesaid case, the education management system 10 may provide credits to the predetermined major subject, but the present invention is not limited thereto. The education management system may be implemented such that a major subject is newly made according to a predetermined talent assessment method (various permission input signals of the members of a talent assessment committee) based on the name of qualification which is not included in a curriculum of a major department, but is related to the major subject, and credits for the newly made major subject are admitted.

Also, in the aforesaid case, the education management system may be implemented so that various vocational groups, such as associations being present in the society and the like can participate in a teaching area or an evaluating area, and may be based on learner-centered autonomous education rather than public education or a teacher-centered education.

Also, the education management system 10 may be implemented so that award records of an Olympic winner, a winner of each of the International Vocational Training Competition, the National Vocational Training Competition, the Vocational Training Competition by Region, and an international contest's winner and the like are admitted as talents of talent matters. Moreover, the education management system 10 may include the talent of a holder of an intangible cultural asset or an educator who has learned an intangible cultural asset as a talent included in the talent matters. In the case of the talent of an educator who has learned an intangible cultural asset, talent-based credits can be differential according to a learning period.

Also, the education management system 10 may be implemented so that private qualification or special authorized qualification except for a national technology or national qualification can be recognized as a student's talent. Examples of private or special certified qualification are a special guard, a private examiner (a detective), an exceptional child (handicapped child) instructor, a management diagnose, a cost manger, a bond manager (the Korea Productivity Center), a securities analyst, an investment banker, a money manager, a financial risk manager (the Korea Securities Dealer Association), an international licensed trader, a foreign exchange manager (the Korean International Trade Association), a multimedia expert (the Korea Multimedia Association), a domestic travel guide (the Korea Tourism Association), a general operation specialist (the Korea Investment Trust Association), a social insurance manager (the Korea Labor-Management Relation Research Association), a futures trading consultant (the Korea Futures Association), a policy analysis appraiser (the Korea Policy Capacity Development Institute), a trade English interpreter and translator, an industrial machine maintenance technician, a craftsman injection mold making, a craftsman press die making, an electrical measurement controller, a machine electron controller, a fixture manufactuer, a CNC machine cutting processor, a machinery design engineer, a machine and system controller, an a machine tool cutting processor, an automation equipment controller, an industrial electronic device manufacturer, a computer operator, a furniture design draftperson (the Korea Chamber of Commerce and Industry), a credit analyst, a credit risk analyst, a loan examiner, an international financer, a portfolio manager (the Korea Banking Institute), a finance and economy manager, a financial manager (the Federation of Korean Industries), a person in charge of pharmaceutical information (the Ministry of MR Education of the Korea Pharmaceutical Manufacturers Association), a character marketing planner (the headquarter of C.M.P certification), the Associate Financial Planner Korea (AFPK), a certified financial planner (CFP) (the Korea Financial Planners Association), an outsourcing instructor (the Korea Outsourcing Companies' Association), a financial bond manager (the Korea Finance Bond Association), a trainer (the Korean Horse Affairs Association), a traffic accident analyst (the Korea Transportation Safety Authority), a general asset manager (the Korea Life Insurance Association, and the Korea Non-Life Insurance Association), an equity-linked life insurance selling administrator (the Korea Life Insurance Association), a hospital administrative agent (the Korean College of Hospital Administrators), a bonsai grower (the Korean Bonsai Growers Cooperative), a purchasing material manager (the Korean Purchasing Material Management Association), tree health technology qualification (the Korea Tree Health Association), a prescribed labor, a reviser (the Korea Blind Union), the National Information Competence Test (the headquarter of NIT evaluation of the Korea Agency of Culture Information), an interior coodinator (the Korea Interior Coordination Academy), an outdoor advertiser (the Korea Advertising Association), a taxi driving test (the Korea National Joint Conference of Taxi Association), an aromatherapist (the Certification Academy for Holistic Aromatherapy), a clinical art expert/art therapist and an art therapy expert, (the Korean Art Therapy Association), an public information manager (the Public Information Manager Authentication Committee), a shop master (the Korea Institute of Vocational Development) and the like.

One example in which the aforesaid talent matters are admitted as credits is shown in the following Table 2.

**[Table 2]**

| Talent Classification Subject | Detailed Item | Recognized Credit |
|---|---|---|
| National Qualification (142 kinds) | Fire protection system manager | 70 |
| | Electronic commerce manager | 50 |
| | Licensed real estate agent | 30 |
| | Aircraft mechanic | 100 |
| Private and special qualification (66 kinds) | Special bodyguard | 70 |
| | Private investigator | 70 |
| | Securities analyst | 50 |
| International contest winner (10 fields) | More than 15 countries | 50 |
| | 5 to 15 countries | 30 |
| | Less than 5 countries | 10 |
| Intangible cultural asset holder | Holder | 100 |
| | Learning educator | 70 |
| Olympic winner | Gold medal | 100 |
| | Silver medal | 70 |
| | Bronze medal | 30 |
| Winner of the International Vocational Training Competition | Gold medal | 100 |
| | Silver medal | 70 |
| | Bronze medal | 30 |
| the National Vocational Training Competition | Special award (presidential award/prime ministerial award) | 70 |
| | Gold tower | 50 |
| | Silver tower | 40 |
| | Bronze tower | 30 |
| the Vocational Training Competition by Region | Gold tower | 30 |
| | Silver tower | 20 |
| | Bronze tower | 10 |

As shown in Table 2, the education management system 10 may the assessment of talents according to predetermined standards regarding a student's talent matters and may provide completed credits for the student's major department or major subject based on a result of the assessment of talents.

According to the present embodiment, the education management system 10 may be implemented so that a student can obtain credits required to graduate based on only his or her talent matters and can obtain the degree of a corresponding major department.

Meanwhile, the education management system 10 may be implemented such that working hours performed through an occupation according to the classification of occupations are admitted as credits based on careers. One example of occupations according the classification of occupations is shown in the following Table 3.

**[Table 3]**

| Big Classification of Job | Middle Classification of Job | Credit Code | Career Admitted as Credits [/12 months] |
|---|---|---|---|
| 1 Manager | 11 Public enterprise administration | A1 | 12 |
| | 13 Professional service management | A2 | 12 |
| | 14 Construction, electricity & Production-related management | A3 | 12 |
| | 15 Sale & customer service management | A4 | 12 |
| 2 Expert and relevant practician | 21 Scientific expert & relevant works | B1 | 6 |
| | 22 Information communication expert and technical posts | B2 | 6 |
| | 23 Engineering expert & technical posts | B3 | 6 |
| | 24 Health & human services and religion-related works | B4 | 6 |
| | 25 Educationalist & relevant works | B5 | 6 |
| | 26 Law & administration professional practices | B6 | 6 |
| | 27 Management and financial specialist & relevant works | B7 | 6 |
| | 28 Culture, art & sports expert and relevant works | B8 | 6 |
| 3 Office worker | 31 Management & accounting-related office works | C1 | 12 |
| | 32 Finance & insurance-related office works | C2 | 12 |
| | 33 Law & inspection-related office works | C3 | 12 |
| | 39 Counsel, guidance, statistics-related office works | C4 | 12 |
| 4 Service worker | 41 Police, firefighting & security-related services | D1 | 18 |
| | 42 Hairdressing and beauty, ceremony & medical assistance services | D2 | 18 |
| | 43 Transportation & leisure services | D3 | 18 |
| | 44 Cooking & food services | D4 | 18 |
| 5 Marketer | 51 Sales work | E1 | 24 |
| | 52 Shop sales position | E2 | 24 |
| | 53 Visiting, street stall & communication sales-related works | E3 | 24 |
| 6 Agricultural and fishery skilled worker | 61 Skilled work in agriculture & stockbreeding | F1 | 24 |
| | 62 Skilled work in forestry | F2 | 24 |
| | 63 Skilled work in fishery | F3 | 24 |
| 7 Craftsman and relevant worker | 71 Food processing-related technical post | G1 | 12 |
| | 72 Fiber, clothes & leather-related technical posts | G2 | 12 |
| | 73 Timber, furniture, instrument & signboard-related technical posts | G3 | 12 |
| | 74 Metal molding-related technical post | G4 | 12 |
| | 75 Transportation & machine-related technical posts | G5 | 12 |
| | 76 Electricity and electronics-related technical posts | G6 | 12 |
| | 77 Construction & mining-related technical posts | G7 | 12 |
| | 78 Display & communication equipment-related technical posts | G8 | 12 |
| | 79 Other function-related works | G9 | 12 |
| 8 Worker in device & machine operation and assembly | 81 Food processing-related mechanical operation work | H1 | 6 |
| | 82 Fiber & shoes-related mechanical operation work | H2 | 6 |
| | 83 Chemistry-related mechanical operation work | H3 | 6 |
| | 84 Metal & non-metal-related mechanical operation work | H4 | 6 |
| | 85 Machine manufacture and relevant mechanical operation work | H5 | 6 |
| | 86 Electricity and electronics-related mechanical operation work | H6 | 6 |
| | 87 Driving & transportation-related works | H7 | 6 |
| | 88 Water & sewage, recycling-related mechanical operation works | H8 | 6 |
| | 89 Timber and printing-related mechanical operation works | H9 | 6 |
| 9 Worker in simple labor | 91 Construction & mining-related simple labor works | I1 | 24 |
| | 92 Transportation-related simple labor work | I2 | 24 |
| | 93 Production-related simple labor work | 13 | 24 |
| | 94 Cleaning & security-related simple labor works | I4 | 24 |
| | 95 Housework, food & sales-related simple labor works | I5 | 24 |
| | 99 Agricultural & fishery and other service-related simple labor works | I6 | 24 |
| 10 Solider | 100 Solider | J1 | 12 |

As shown in Table 3, the education management system according to the present embodiment may provide the credits for the student's major department or major subject in proportion to the working hours performed through the to be provided through the occupation according to the classification of occupations.

As such, the education management system 10 may be implemented so that the student can obtain a degree of the major department based on only credits obtained through the career matters. In the present embodiment, the education management system 10 enables the student to obtain the degree of the major department by enabling the student's career matters of a working period of about five years to be admitted as credits required to graduate (for example, 140 credits).

According to the present embodiment, the education management system 10 may enable corresponding talent matters or career matters to be admitted as the credits for the relevant student's major department or major subject by assessing or screening the talent matters or career matters according to the predetermined standards based on the talent matters or career matters included in a request signal for credit recognition received from the user terminals 4, 6 and may record the corresponding completed credits in a school register or a grade register. Also, the education management system 10 may record the relevant student's degree of the major department in a school register, a certificate of expectant graduation, a certificate of graduation and the like when the total number of completed credits is more than the number of credits required to graduate.

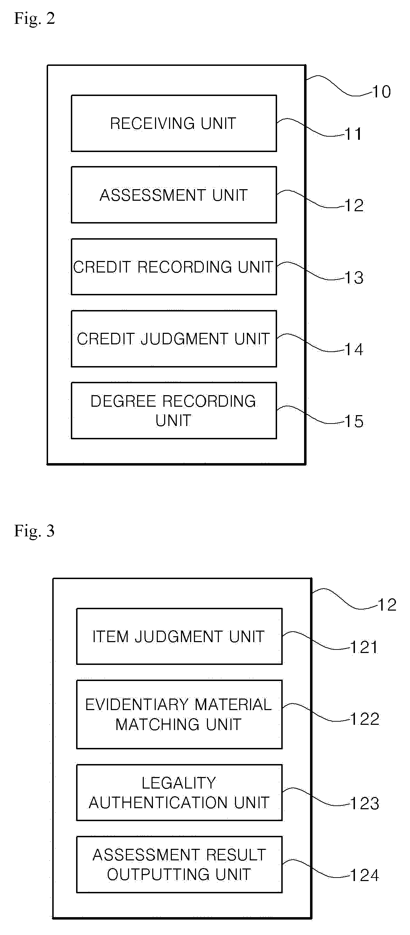

FIG. 2 is a block diagram showing one embodiment of the education management system of FIG. 1.

Referring to FIG. 2, the education management system according to the present embodiment includes a receiving unit 11, an assessment unit 12, a credit recording unit 13, a credit judgment unit 14, and a degree recording unit 15.

The receiving unit 11 receives the request signal for credit recognition for the student's talent matters or career matters regarding the major department or major subject. The receiving unit 11 may include a user interface linked with the user terminal through a communication module and network connected to a network. That is, the receiving unit 11 may receive the student's talent data or career data inputted or transmitted through the user interface.

The assessment unit 12 may perform talent assessment for talent matters included in the request signal for credit recognition. Also, the assessment unit 12 may perform career assessment for career matters included in the request signal for credit recognition.

The assessment unit 12 may admit or confirm legality of the talent matters or career matters by extracting an identifier (an identifier of the higher authority and the like) from talent data or career data transmitted from the receiving unit 11, and comparing or matching it with standard information of pre-stored information (database information, information of a cloud system and the like). Here, the identifier of the higher authority may be an authorized agency (a company, a public institution, a public entity and the like) which issues or authenticates the recording of talent matters or career matters.

Also, the assessment unit 12 may extract talent information or career information from the talent data or career data transmitted from the receiving unit 11 when there is no evidentiary material of an identifier of the higher authority and the like, and may be implemented so as to confirm legality of the talent matters or career matters by being linked with the higher authority related to the extracted talent information or career information.

Also, the assessment unit 12 may first judge whether or not the talent matters or career matters are included in the credit recognition items according to the implementation. In such a case, the assessment unit 12 may compare the pre-stored credit recognition items with the talent matters or career matters. Also, the assessment unit 12 may provide information on relevant talent matters or career matters to the terminals of members of a pre-designated assessment evaluation committee when there are no talent matters or career matters in the pre-stored credit recognition items and may receive or reject the request of credit recognition for the talent matters or career matters according to various approval or rejection signals inputted from the terminals of the members.

When a request signal for credit recognition for talent matters or career matters which are not present in the current credit recognition items is normally received, the assessment unit 12 may generate a subject name for a new major subject and may transmit the subject name to the credit recoding unit 13.

The credit recording unit 13 may record completed credits for the student's major department or major subject according to an assessment processing result. In such a case, the credit recording unit 13 may make the student's new major subject according to the subject name from the assessment unit 12 and may record completed credits for the corresponding major subject.

The credit judgment unit 14 may judge whether or not the total number of credits completed by the student (the total number of completed credits) including credits satisfied by talent assessment or career assessment is more than the number of credits required to graduate. In one embodiment, the credit judgment unit 14 may judge whether the total number of completed credits resulting from talent assessment and career assessment is more than 60% or less than 100% of the number of credits required to graduate. A ratio of each of the talent assessment and career assessment may be separately designated or may be designated according to the major department.

The degree recording unit 15 may record a degree of the major department for the corresponding student when the number of credits completed by the student is more than the number of credits required to graduate. The degree recording unit 15 may record the degree of the major department for the corresponding student in a school register or a grade register when the number of credits above a constant ratio among the number of credits completed by the student according to a judgment result of the credit judgment unit 14 is more than the number of credits (satisfied credits) required by talent matters and/or degree matters, and the total number of completed credits is more than the number of credits required to graduate.

FIG. 3 is a block diagram showing an assessment unit of the education management system of FIG. 2.

Referring to FIG. 3, the assessment unit 12 according to the present embodiment may include an item judgment unit 121, an evidentiary material matching unit 122, a legality authentication unit 123 and an assessment result outputting unit 124.

The item judgment unit 121 may judge whether the talent matters or career matters included in the request signal for credit recognition received from the user terminal are included in the predetermined credit recognition items. The item judgment unit 121 may be implemented of a means configured to parse the request signal for credit recognition from the receiving unit 11, extract talent matters or career matters from parsing data, and compare the extracted talent matters or career matters with the predetermined credit recognition items, or at least one constitution unit for performing a function corresponding to this means.

The evidentiary material matching unit 122 may confirm legality of the talent matters or career matters based on an evidentiary material when there is the evidentiary material for the talent matters or career matters. Here, the confirmation of legality may include matching a digital sign or time stamp of the higher authority included in the evidentiary material with standard information.

The legality authentication unit 123 may confirm the legality of talent matters or career matters by being linked with the higher authority related to the talent matters or career matters when there is no evidentiary material of the talent matters or career matters. That is, the legality authentication unit 123 may be implemented of a means capable of confirming the legality of talent matters or career matters by transmitting or receiving data or sharing information, or a constitution unit for performing a function corresponding to this means.

The assessment result outputting unit 124 may output assessment completion signals regarding the passing or rejection of assessment for talent matters or career matters based on a confirmation result of legality. The assessment completion signals may be transmitted to the credit recording unit 13. Also, according to its implementation, when the assessment is rejected, the assessment result outputting unit 124 may be linked with a multimedia message service system or a short message service system so as to transmit an assessment rejecting signal or information on guide for the input of an additional material and the like to the user terminal or the relevant student's portable terminal which transmitted the request signal for credit recognition for the talent matters or career matters.

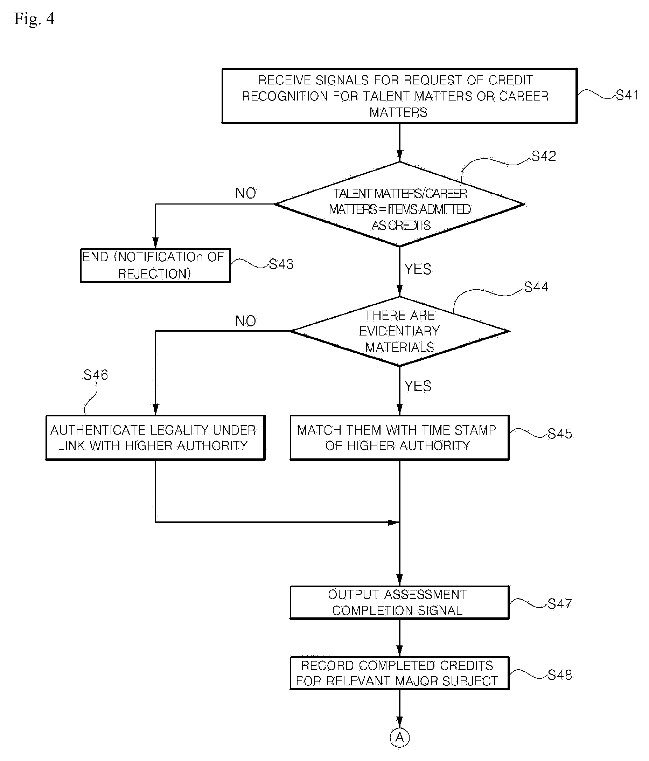

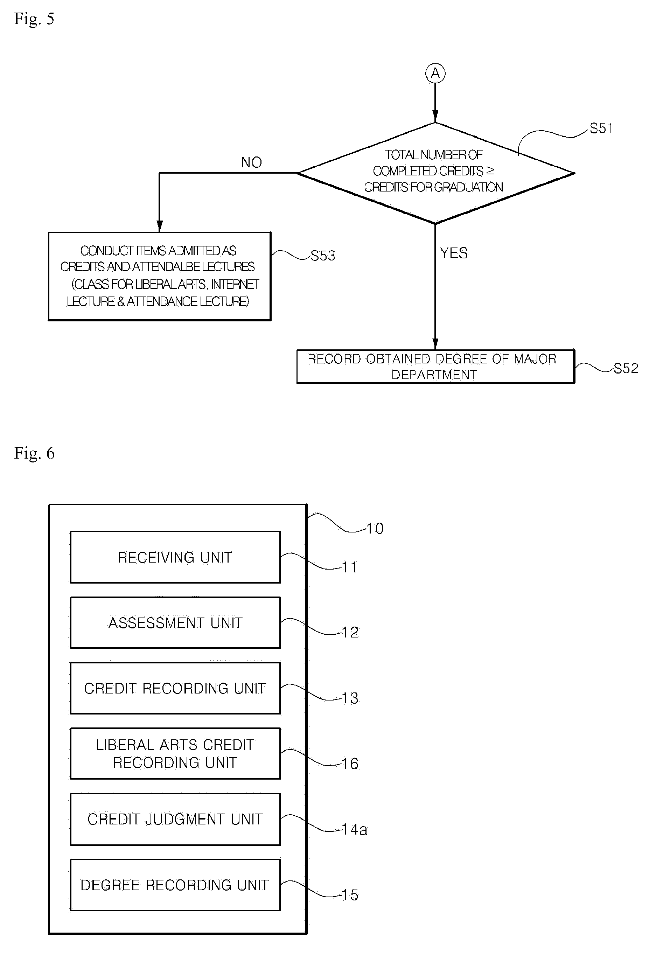

FIGS. 4 and 5 are flow charts showing an education management method based on talents and careers (hereinafter briefly referred to as the 'education management method') according to one embodiment of the present invention.

Referring to FIGS. 4 and 5, in the education management method for enabling talent matters or career matters to be admitted as credits through the education management system according to the present embodiment, the education management system first receives the request signal for credit recognition for the student's talent matters or career matters with regard to a major subject of a major department S41.

Next, the education management system performs an assessment processing process for the talent matters or career matters S42 to S47.

The processing for the talent matters or career matters may be implemented through the following processes. First, the education management system judges whether or not the talent matters or career matters are included in the predetermined credit recognition items S42.

As a result of the judgment, when the talent matters or career matters are not included in the predetermined credit recognition items, the education management system may transmit a notification of rejection in response to the request signal for credit recognition of the talent matters or career matters after completing this assessment processing process.

Also, according to its implementation, when the talent matters or career matters are not included in the predetermined credit recognition items, the education management system may transmit information relating to the corresponding talent matters or career matters to the assessment committee members' terminals according to a predetermined processing process, and may receive various reply signals regarding permission or rejection of the assessment from the members' terminals, and when there are various opinions of the assessment permission among the received reply signals, the education management system may normally receive the request of credit recognition for the talent matters or career matters and may perform the corresponding assessment process. Of course, when there are various opinions of the assessment rejection, the education management system may transmit a reply signal for rejection to the relevant signal for the request of credit recognition.

Furthermore, the education management system judges whether or not there is an evidentiary material for the talent matters or career matters in the request signal for credit recognition S44. When there is the evidentiary material, the education management system confirms legality of the talent matters or career matters based on the evidentiary material S45. Here, the confirmation of legality may include matching an identifier of the higher authority of a digital sign or a time stamp of the higher authority included in the evidentiary material with pre-stored standard information.

When there is no evidentiary material for the talent matters or career matters, the education management system may confirm legality of the talent matters or career matters by being linked with the higher authority related to the talent matters or career matters, and may certify the legality according to a confirmation result S44, S46.

Furthermore, the education management system outputs assessment completion signals regarding the passing or rejection of assessment for the talent matters or career matters based on the confirmation result of legality S47.

When the aforesaid assessment processing process is completed, the education management system admits completed credits for the major subject according to a result of performing career assessment and records them in the degree recoding unit in the relevant student's degree recoding unit S48.

Next, the education management system judges whether or not the total number of credits completed by the student including the number of credits satisfied by at least one kind of matters of talent matters and career matters is more than the number of credits required to graduate S51. Here, the satisfied credits may be 100% over a constant ratio of credits required to graduate For example, in the step of judging whether or not the number of credits completed by the student is more than the number of credits required to graduate, when the number of completed credits resulting from career assessment is more than 60% and less than 100% of the number of credits required to graduate, and the number of credits completed by the student is more than the number of credits required to graduate, the education management system may judge that the corresponding student satisfies requirements for graduation.

Next, when the total number of completed credits including credits resulting from talent assessment and career assessment is more than the number of credits required to graduate, the education management system records a degree obtained by the student of a corresponding major department in a school register or a grade register S52.

Meanwhile, when the student's total completed credits do not include more than credits satisfied by any one kind of matters of the talent matters and career matters, or, the student's total completed credits are smaller than graduation credits, the education management system may provide the user terminal connected through a network with a guide to the credit recognition items or a guide to lectures or courses (classes of liberal arts, internet classes, attendance classes and the like) on offer before terminating the education management method S53.

FIG. 6 is a block diagram showing an education management system according to another embodiment of the present invention.

Referring to FIG. 6, the education management system 10 according to the present embodiment includes the receiving unit 11, the assessment unit 12, the credit recording unit 13, a credit judgment unit 14a, the degree recording unit 15 and a liberal arts credit recording unit 16.

In the present embodiment, the receiving unit 11, the assessment unit 12, the credit recording unit 13, the credit judgment unit 14a, and the degree recording unit 15 are substantially identical to the corresponding elements of the education management system previously explained referring to FIG. 2 except for the matter that the credit judgment unit 14a is implemented to judge whether the number of credits obtained by talent matters or career matters are 100% of the number of credits required to graduate, or the number of credits obtained by liberal arts are included in the number of credits required to graduate over a constant ratio.

The liberal arts credit recording unit 16 may record completed credits for liberal arts or attendance classes according to a result of the participation in the student's debate class or topic presentation class. As a result of participation, when a student participates in a debate class by topic or a topic presentation class having different credits, the liberal arts recording unit may include receiving a participation recognition signal or a completion recognition signal from the terminal of a professor in charge.

When the number of completed credits for liberal arts is smaller than 100% of the number of credits satisfied by talent matters or career matters among credits required to graduate according to a major department, the completed credits for liberal arts may be additionally required for graduation or the acquiring of a degree of the corresponding student.

Liberal arts may be provided to be easily and variously approached by the people who do not enter university, need a degree, or would like to acquire a lot of knowledge. For example, the liberal arts may be provided in a form in which a student introduces his or her job, talent or expert knowledge, or a form which a student performs topic presentation regarding a task achieved through his or her job or talent. The topic presentation class of the liberal arts may be provided in a similar form to the progress method of a technology entertainment design (TED) and the like.

Also, the liberal arts may be utilized as a space which may satisfy the people's various cultural desires. For example, when the liberal arts are provided in the form of a debate class or a topic presentation class, the liberal arts may be utilized as a space which may satisfy the people's various cultural desires as the class is conducted so that experience or knowledge possessed by individuals can be shared through the introduction of various people and a relationship among the people performed before or after the class, or during the class, or may be utilized a platform for initiating others into a person's talent or sharing knowledge.

In the case of a specific major department, completed credits obtained by attendance classes may be required for a relevant student's graduation or the acquiring of a degree when credits satisfied by talent matters or career matters among credits for graduation is smaller than 100%.

The attendance classes may be selectively generated at the relevant professor's discretion. Also, the attendance classes may be included as a part of the liberal arts, but when it is difficult to include it in the liberal arts, for example, in the case of the attendance of education for a certificate and the like, by admitting it as credits for the attendance classes, there may be provided an environment which can easily acquire credits except for acquiring credits based on the student's talent matters or career matters.

Also, in addition to the liberal arts and attendance classes, internet classes may be established so that the student can acquire his or her insufficient credits. In such a case, the internet classes may be guided to students according to the opening of lectures of subjects (major subjects or liberal arts) which are related to a student's talent matters or career matters or are of help to the talent matters or career matters.

According to the aforesaid constitution, the liberal arts credit recording unit 16 may be implemented of a means for recording credits based on attendance classes or internet lectures except for liberal arts according to its implementation or a constitution unit for performing a function corresponding to this means.

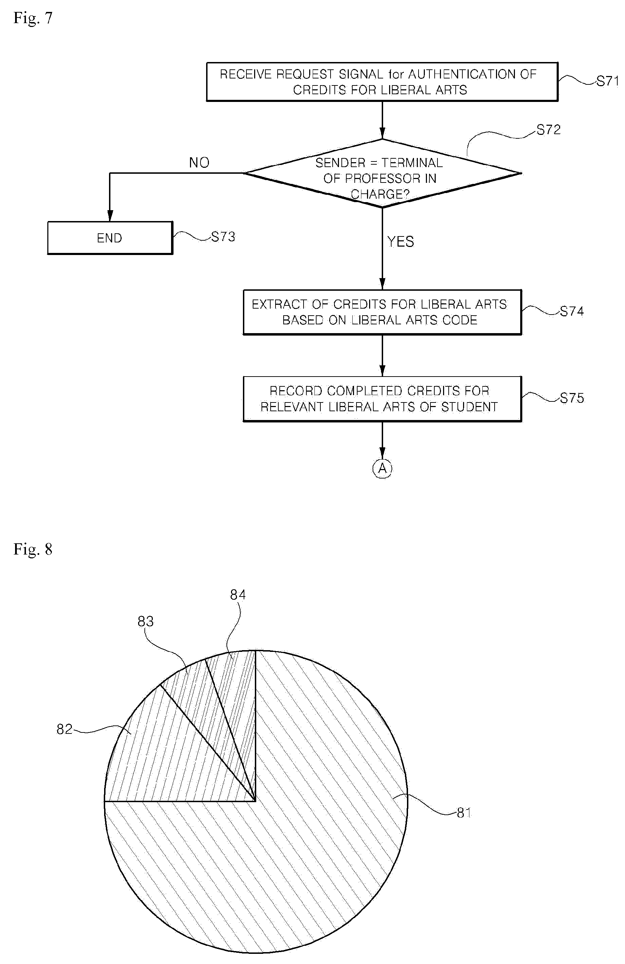

FIG. 7 is a flow chart showing an education management method according to another embodiment of the present invention.

Referring to FIG. 7, in the education management method according to the present embodiment, the education management system may perform the following process for recognizing liberal art credits while performing the process for recognizing credits for the career matters (including talent matters) through the education management method previously explained with reference to FIG. 4.

First, the education management system receives a request signal for credit recognition for liberal arts from the user terminal S71. The request signal for credit recognition for liberal arts may include may include class codes for liberal arts, an identifier of the terminal of a professor in charge, a student identifier, data on recognition of the completion of a student's liberal arts (or the recognition of participation) and the like. Also, the request signal for credit recognition may be replaced with signals for the request of credit recognition for attendance classes, internet lectures and the like except for the liberal arts established for a corresponding student according to implementation. Liberal arts or classes for liberal arts may be provided by a debate class, a topic presentation class and the like.

Next, the education management system authenticates a sender who has sent the request signal for credit recognition for liberal arts S72. The authentication of the sender may be performed such that the sender judges whether or not a terminal is one of a professor in charge. That is, the education management system may authenticate the sender by comparing pre-stored registration terminal information with an identifier (a MAC number, an IP address and the lie of the sender) of the sender included in the signals for the request of credit recognition.

As a result of judgment in step S72 above, when the sender is normally authenticated, the education management system may terminate the process of the education management method. Also, the education management system may operate to be protected from hacking from the outside by notifying abnormal approach to a manager according to its implementation.

As a result of judgment in step S72 above, when the sender is normally authenticated, the education management system extracts pre-stored credits for liberal arts based on the codes of liberal arts extracted from the request signal for credit recognition S74. This process may be intended to provide different credits to various liberal arts (a debate class, a topic presentation class and the like) in advance so that the student can attend his or her desired lectures by topic and level. For this, the education management system may store predetermined credits to various liberal arts and may extract and use them as needed.

Next, the education management system may record completed credits for the liberal arts taken by the student through a liberal art credit recording unit S75. That is, the education management system may be intended to record the completed credits of liberal arts based on confirmation signals of the professor in charge of a debate class or a topic presentation class taken by the student. Here, normally completion of the class participated by the student, namely, a result of the participation may be obtained by the education management system from a participation recognition signal of the student or a completion recognition signal received from the professor's terminal with regard to the student who took a debate class by topic or a topic presentation class having different credits.

Next, the education management system may perform the steps (S51 to S53) illustrated in FIG. 5. In such a case, the credit judgment unit (see 14a of FIG. 6) of the education management system may be implemented to judge whether or not the number of credits obtained by liberal arts is included in the number of credits required to graduate in more than a constant ratio except for judging whether or not the number of credits obtained by talent mattes or career matters is 100% of the number of credits required to graduate.

For example, the credit judgment unit may be implemented such that a student's total number of completed credits are admitted as graduation credits when first completed credits obtained by talent matters or career matters, second completed credits obtained by liberal arts, third completed credits obtained by attendance classes, and fourth completed credits obtained by internet classes are combined at a constant ratio.

FIG. 8 is a view showing the constitution of credits required to graduate according to the education management method of FIG. 7.

Referring to FIG. 8, the education management method according to the present embodiment may be implemented so that a student' degree can be obtained based on his or her talent matters or career matters by constituting graduation credits elastically and the student can learn knowledge and culture in various fields.

For example, when graduation credits are 140 credits, the graduation credits according to the present embodiment may be provided such that first completed credits 81 based on talent matters or career matters is 60 to 100% of graduation credits, second completed credits 82 for liberal arts is 10 to 30%, third completed credits 83 for attendance classes is more than 5%, and fourth completed credits 84 for internet classes is more than 5%.

As set forth above, according to some embodiments of the present invention, it is advantageous in that the education management system and method can elastically operate the constitution of credits for graduation according to a student's selection or major department except for a curriculum in which all credits for graduation are completely obtained by talent matters or career matters. In such a case, it is advantageous in that the student can very elastically constitute his or her curriculum within the scope of credits for graduation and thus can obtain a degree based on his talents and careers while participating in his or her school life.

According to some embodiments of the present invention, there may be provided the education management system and method which are effective in developing and utilizing human resources by enabling a student's talents or careers to be admitted as credits through a predetermined rule or a fixed authentication procedure, and which enable graduation credits to be obtained based on only credits obtained by talents and/or careers.

Also, according to some embodiments of the present invention, there may be provided the education management system and method which enable talents and knowledge to be admitted as a degree so that a student who has the talents and knowledge can take the degree, the talents being demonstrated in areas in which the talents is needed and the knowledge being obtained in areas (an industrial site, an authorized education institution, an international contest and the like) which can gain the careers.

Also, according to some embodiments of the present invention, there may be provided the education management system and method that enable careers except for school classes to be incorporated into a system for the completion of online education and to be linked with credits required for the obtaining of a degree by evaluating the careers pursuant to predetermined rules and authenticating the careers, which was not attempted in a conventional online or offline education system and method.

Also, according to some embodiments of the present invention, there may be provided the education management system and an education management method that can be easily and variously approached by the people who do not enter university, need a degree, or would like to acquire a lot of knowledge, can be utilized as a space capable of satisfying the people's various cultural desires, can be a reference library where university or graduate school students can faithfully study, and can perform a role as a platform for initiating others into a person's talents and sharing knowledge.

Also, according to some embodiments of the present invention, there may be provided the education management system and an education management method based on talents and careers that enable various functional groups such as associations existing in the society except for career assessment to participate in a teaching area, and enable the organizations of company units to participate in the teaching area and in courses as themselves, thereby allowing to take courses based on links between schools and industry.

Also, according to some embodiments of the present invention, there may be provided the education management system and an education management method based on talents and careers in an alternative university form on the basis of learner-centered autonomous education rather than public education or educator-centered education.

As previously described, in the detailed description of the invention, having described the detailed exemplary embodiments of the invention, it should be apparent that modifications and variations can be made by persons skilled without deviating from the spirit or scope of the invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims and their equivalents.

## Claims

1. An education management system based on talents and careers, comprising:
a receiving unit configured to receive a request signal for credit recognition to a student's talent matters or career matters relating to major subjects of a major department;
an assessment processing unit configured to perform assessment of talent matters or career matters;
a credit recording unit configured to record completed credits for a major department or major subjects according to a results of assessment processing;
a credit judgment unit configured to judge whether or not the total number of completed credits of the student including credits satisfied by the talent matters and career matters is more than the number of credits required to graduate; and
a degree recording unit configured to record a degree of the major department for the student when the total number of completed credits is more than the number of credits required to graduate.

2. The system of claim 1, wherein the assessment processing unit comprises: an item judgment unit for judging whether or not the talent matters or the career matters are included in predetermined credit recognition items; an evidentiary material checking unit for confirming legality of the talent matters or the career matters based on an evidentiary material basic material when there is the evidentiary material, wherein the confirming of the legality includes comparing the digital sign of a higher authority included in the evidentiary material with standard information; a legality authentication unit linked with the higher authority related to the talent matters or career matters when there is no evidentiary material for the talent matters or career matters, thereby confirming legality of the talent matters or career matters; and an assessment result outputting unit for outputting an assessment completion signal regarding the passing or rejecting of assessment for the talent matters or career matters based on a confirmation result of the legality.

3. The system of claim 2, wherein the assessment unit transmits relevant information (information and the like relating to the talent matters or career maters) to terminals of predetermined assessment committee's members when the talent matters or career matters are not included in the credit recognition items as a result of judgment of the item judgment unit, and receives reply signals for the permission or rejection of assessment so as to perform assessment of the talent matters or career matters according to various opinions for the permission of the assessment.

4. The system of claim 1, wherein the credit judgment unit judges whether the total number of completed credits resulting from the assessment is more than 60% of the number of credits required to graduate or less than 100% thereof, or judges if the number of first completed credits resulting from the assessment is more than 60 and less than 100% of the number of credits required to graduate, or if the number of second completed credits for liberal arts is 10 to 30% of the number of credits required to graduate, the number of third completed credits for attendance classes is more than 5% of the number of credits required to graduate, and the number of fourth completed credits for an internet lecture is more than 5% of the number of credits required to graduate.

5. The system of claim 4, further comprising a liberal arts credit recording unit which allows recognition of the second completed credits according to a result of the student's participation in a debate class or a topic presentation class, wherein the result of the participation is obtained from a participation or completion recognition signal received from the terminal of a professor in charge of the student who participates in a debate class by topic or a topic presentation class having different credits.

6. An education management method based on talents and careers, comprising:
receiving a request signal for credit recognition for a student's talent matters or career matters regarding major subjects of a major department;
performing assessment of the talent matters or career matters;
allowing the recognition of completed credits regarding the major department or the major subjects according to a result of performing the assessment;
judging whether the total number of completed credits of the student including the number of credits satisfied by the talent matters and career matters is more than the number of credits required to graduate; and
recording a degree of the major department for the student when the total number of completed credits is more than the number of credits required to graduate.

7. The method of claim 6, wherein the performing of the assessment includes: judging whether or not the talent matters or the career matters are included in predetermined credit recognition items; confirming legality of the talent matters or the career matters based on an evidentiary material basic material when there is the evidentiary material, wherein the confirming of the legality includes comparing the digital sign of a higher authority included in the evidentiary material with standard information; confirming legality of the talent matters or career matters by being linked with the higher authority related to the talent matters or career matters when there is no evidentiary material for the talent matters or career matters; and outputting an assessment completion signal regarding the passing or rejecting of assessment for the talent matter or career matters based on a confirmation result of the legality.

8. The method of claim 7, wherein as a result of judging whether or not the talent matters or the career matters are included in predetermined credit recognition items, when the talent matters or career matters are not included in the items, the education management system transmits relevant information to terminals of the members of a predetermined assessment committee, receives reply signals regarding permission or rejection of the assessment for the talent matters or career matters from the members' terminals, and performs the assessment of the talent matters or career matters according to various opinions of the permission of the assessment among the received replay signals.

9. The method of claim 6, wherein the judging whether the total number of completed credits is more than the number of credits required to graduate is implemented to judge whether the total number of completed credits resulting from the assessment performed in the credit judgment unit is more than 60% of the number of credits required to graduate or less than 100% thereof, or judges if the number of first completed credits resulting from the assessment is 60 to 100% of the number of credits required to graduate, the number of second completed credits for liberal arts is 10 to 30% of the number of credits required to graduate, the number of third completed credits for attendance classes is more than 5% of the number of credits required to graduate, and the number of fourth completed credits for an internet lecture is more than 5% of the number of credits required to graduate.

10. The method of claim 9, further comprising admitting the second completed credits according to a result of the student's participation in a debate class or a topic presentation class, wherein the result of the participation is obtained by a participation or completion recognition signal regarding the student who participated in graded debate classes or topic presentation classes having different credits, received by the education management system from the terminal of the professor in charge.
